# EUROPEAN PATENT APPLICATION

(11) **EP 4 049 879 A1**
(43) Date of publication of application: **31.08.2022**
(21) Application number: 20878728.3
(22) Date of filing: 30.04.2020
(51) Int. Cl.: B60L 3/00, B60L 53/20, H02P 25/18

(54) **MULTI-MODULE INTELLIGENT DRIVING SYSTEM FOR HIGH/MIDDLE-POWER ELECTRIC VEHICLE, AND HIGH/MIDDLE-POWER ELECTRIC VEHICLE**

(30) Priority: 23.10.2019 CN 201911012111
(71) Applicant: Jiangsu Juci Electrical Drive Technology Co., Ltd, Wuxi, Jiangsu 214104 (CN)
(72) Inventor: WANG, Wei, Wuxi, Jiangsu 214104 (CN); HUA, Wei, Wuxi, Jiangsu 214104 (CN); ZHOU, Jianhua, Wuxi, Jiangsu 214104 (CN); WANG, Qing, Wuxi, Jiangsu 214104 (CN); ZHOU, Wei, Wuxi, Jiangsu 214104 (CN); BU, Yanzhu, Wuxi, Jiangsu 214104 (CN); LI, Yugang, Wuxi, Jiangsu 214104 (CN); HU, Yibao, Wuxi, Jiangsu 214104 (CN); CHENG, Xing, Wuxi, Jiangsu 214104 (CN); LIU, Yajun, Wuxi, Jiangsu 214104 (CN); HU, Jinlong, Wuxi, Jiangsu 214104 (CN); LI, Sheng, Wuxi, Jiangsu 214104 (CN); ZHAO, Qichao, Wuxi, Jiangsu 214104 (CN)
(74) Representative: Becker, Eberhard
(86) International application number: PCT/CN2020/087937
(87) International publication number: WO 2021/077707

(57) **Abstract**

A multi-module intelligent driving system for a high/middle-power electric vehicle, and a high/middle-power electric vehicle. According to a power output demand of an electric vehicle, a controller is connected to a battery pack corresponding thereto, for a discharging operation; during the discharging operation, the controller and the battery pack corresponding thereto interact and are connected in a bidirectional communication mode for discharging control, wherein data for communicative interaction comprises a discharging current of each battery pack and the voltage of a cell therein, and the temperature of a cell in each battery pack, and the SOC capacity of each battery pack; and on the basis of the data for communicative interaction, the controller regulates, by means of changing the output power of the controller itself, the discharging current of each battery pack, such that the problems of over-current and/or over-temperature and/or abnormal discharging of the cell in each battery pack during discharging are avoided; moreover, safe discharging of the multi-module intelligent driving system for a high/middle-power electric vehicle is reliably ensured, and the service life of the multi-module intelligent driving system for a high/middle-power electric vehicle is thus prolonged.

## Description

This application was submitted to the Patent Office of the State Intellectual Property Office of the People's Republic of China on October 23, 2019, as an application for Chinese patent with the application No. 2019110121113 and the name of invention as "Multi-Module Intelligent Drive System for High and Medium Power Electric Vehicles and their High and Medium Power Electric Vehicles", and all contents are incorporated in this application through reference.

### Technical field

This invention falls into the field of electric motor, specially involves a multi-module intelligent drive system for high and medium power electric vehicles, and it also involves the high and medium power electric vehicles for which this multi-module intelligent drive system is applied.

### Background technology

The existing multi-module intelligent drive system of medium and high power motors has the general technical problems of low reliability and high cost, although existing technologies have proposed the motor module with multi-winding units to solve this technical problem, there is still a technical problem that it is difficult to achieve unified management of multi-modules. As a result, the status quo that large capacity drives are used for medium and high power motors has not been actually improved, which obviously runs in counter with the future development direction of electric vehicle market that pursues for higher power with high performance at medium and low cost. Therefore, it is an urgent demand on the market to solve this technical problem.

Specifically for battery modules, although the electric vehicle sector has proposed to use the design structure of double battery packs, single battery packs are still in use. Taking the electric vehicles exported to Korea as an example, the products required by the Korean market are vehicle voltage 48V with speed >70km/h, i.e. the riding current on normal level roads is >50A, and the maximum permissible current of vehicle is usually required to be over 80A, considering conditions of loading and running on ramp that require high current. Therefore, considering the discharge capacity of batteries, lithium battery of 48V40AH should be selected. However, lithium batteries are in too large size, making it difficult to install in electric vehicles, also, it is not easy to remove and make maintenance for batteries with excessive weight. The current practice on market is to use two packs of 48V20AH, when one pack is exhausted, the other can be used. With this battery scheme, the maximum discharge current in normal riding exceeds 3C, while the continual running current exceeds 2C, quite harmful to 20AH batteries, this will reduce the service life of batteries, and batteries are apt to heat up, posing a safety hidden hazard.

This applicant focuses on the intelligent drive control field of electric vehicles, and also pays attention to this technical bottleneck. Therefore, a major core R&D subject was established to solve the problem of medium and large power drive. This R&D subject achieved a major breakthrough in 2018, and a number of patent applications were submitted for protection on September 19, 2018, including four invention patents, with the application numbers respectively being CN201811094616.4, CN201811094626.8, CN201811094649.9 and CN201811097434.2. They mainly proposed to achieve high and medium power drive with multi-module intelligent drive system comprising multi-winding units and multi-motor drive unit with centralized coordination and management control and running independently. This can significantly improve the technical bottleneck of low performance reliability and low cost of present high and medium power electric vehicle market, and effectively promote the development of electric vehicle market in the future for higher power and high performance at medium and low cost.

After the said multi-module intelligent drive system was applied on electric vehicles, the applicant found in the scaled applications in batches that batteries in the motor drive control units of this multi-module intelligent drive system would face main technical difficulties such as safe charge and discharge management, as no existing technical information is available for reference in this multi-module technical field, the applicant hopes to conduct in-depth research and development on the control difficulties in charge and discharge when the multi-module intelligent drive system is applied in the electric vehicle field on the basis of this scheme, and put forth effective solutions.

### Contents of invention

In view of this, the purpose of this invention is to provide a multi-module intelligent drive system for high and medium power electric vehicles and their high and medium power electric vehicles, to reliably guarantee the safe discharge of multi-module intelligent drive system for high and medium power electric vehicles, and to finally increase the service life of the multi-module intelligent drive system for high and medium power electric vehicles.

To solve the problem of safe charge and discharge management for multi-module drive, the applicant has retrieved a lot of existing technologies, and found that in the existing technologies, the chargers and batteries of electric vehicles are only in single line communication connection, without interactive information communication, making it impossible to realize safety management for the charge and discharge system, so the safety performance of the system cannot be guaranteed. In this technical background, the creative idea of adopting two-way communication interactive connection in charge and discharge control was proposed, to reliably guarantee the charge and discharge management in the multi-module drive system.

The technical scheme adopted in this invention is as follows:
This invention proposes a charge control method for the multi-module intelligent drive system of high and medium power electric vehicles, the said multi-module intelligent drive system of high and medium power electric vehicles comprises a three-phase AC motor with at least 2 winding units, and the motor drive unit electrically connected corresponding to the said winding units, a motor drive unit comprising the electrically connected battery pack and controller, and a single charger charges at least 2 battery packs according to the charging demand of the battery packs, during charging, the said charger and the battery packs are under control with two-way communication interactive connection, the said communication interaction data include the charging current, and cell voltage of each battery pack, /and cell temperature of each battery pack, / and SOC capacity of each battery pack, and the said charger regulates the charging current of battery packs by changing its own output power based on this communication interaction data, to avoid problems of overvoltage and/or overcurrent and/or overtemperature of the battery pack cells during charging.

Preferably, the charging demand is determined by the cell voltage and/or cell temperature and/or SOC capacity of each battery pack.

Preferably, the said charger is comprised of a high-voltage(HV) to low-voltage(LV) power supply module, a charging single-chip microcomputer, a charging communication module, each battery pack is comprised of a number of cells and a battery management system, the said battery management system is comprised of a battery single-chip microcomputer, a MOS power switch and a battery communication module, two-way communication interactive connection is adopted for the said battery communication module with the said charge communication module, and the said HV to LV power supply module is in corresponding charging connection with the said cells.

Preferably, the said charger realizes two-way communication interactive connection with the battery packs respectively by wire and wireless means.

Preferably, the said communication interactive connection charge control steps include:
S10) The said charger respectively receives the charge demand from the first battery pack and second battery pack, when the first battery pack or second battery pack needs separate charge, it enters step S20), when the first battery pack and second battery pack need charge at the same time, it enters step S30);
S20) The said charger charges the battery packs requiring charge, during charging, the said charger regulates the charging current of the battery packs by changing its own output power on the basis of the said communication interaction data, to avoid problems of overvoltage and/or overcurrent and/or overtemperature from occurring in the said battery pack cell during charging;
S30) It judges whether the voltage difference between the first battery pack and second battery pack has exceeded the preset value of battery pack voltage difference, when the preset value of battery pack voltage difference is exceeded, it enters step S40), when the preset value of battery pack voltage difference is not exceeded, it enters step S50);
S40) The said low voltage battery pack is charged according to the charge demand of the low voltage battery pack, to raise the voltage of the low voltage battery pack, until the voltage difference between the first battery pack and second battery pack is within the range of the preset value of the said battery pack voltage difference, and then it enters step S50);
S50) The said first battery pack and second battery pack are charged simultaneously, during charging, the said charger regulates the charging current of the battery packs by changing its own output power on the basis of the said communication interaction data, to avoid problems of overvoltage and/or overcurrent and/or overtemperature from occurring in the battery pack cells during charging;

Preferably, the said first battery pack and second battery pack respectively calculates the cell voltage and/or cell temperature and/or SOC capacity obtained from sampling, to obtain its corresponding required maximum charging current, and send this required maximum charging current as its corresponding charge demand message to the said charger, the said charger, based on its required maximum charging current, calculates the target charge voltage of the said battery pack, and this target charge voltage is used as the charge target for charging all battery packs.

Preferably, the steps for the said charger to regulate the charging current of battery packs by changing its own output power on the basis of this communication interaction data include: when the voltage difference of a battery pack cell exceeds the preset value of cell voltage difference, the said charger lowers the charging current of this battery pack by reducing the corresponding output power to it, until the difference of its cell voltage is within the range of the said preset value of cell voltage difference, then it automatically resume charge according to the charge demand of this battery pack, to avoid overvoltage problem from occurring in the battery pack cells during charging.

Preferably, the steps for the said charger to regulate the charging current of battery packs by changing its own output power on the basis of this communication interaction data include: when the cell temperature of a battery pack exceeds the preset value of cell temperature difference, the said charger lowers the charging current of this battery pack by reducing the corresponding output power to it, to reduce the cell temperature of that battery pack, until its cell temperature is within the range of the said preset value of cell temperature, then it automatically resume charge according to the charge demand of this battery pack, to avoid problem of overtemperature from occurring in the battery pack cells during charging.

Preferably, the steps for the said charger to regulate the charging current of battery packs by changing its own output power on the basis of this communication interaction data include: when the said charger detects that the charging current of a battery pack has exceeded the preset highest limit of charging current, it automatically turns off the MOS power switch of this battery pack to enter the overcurrent protection mode, to avoid the problem of overcurrent from occurring in battery pack cells during charging.

Preferably, a high and medium power electric vehicle, driven by multi-module intelligent drive system, the charge control method of the said multi-module intelligent drive system is as described above, and the power of the said electric vehicle is no less than 1kW.

Preferably, ternary lithium batteries are used for all battery packs.

This invention also proposes a multi-module intelligent drive system of high and medium power electric vehicles, the said multi-module intelligent drive system of high and medium power electric vehicles comprises a three-phase AC motor with at least 2 winding units, and the motor drive unit electrically connected corresponding to the said winding units, a motor drive unit comprising the electrically connected battery pack and controller, the said controller is connected with the corresponding battery pack in discharging according to the power output demand of the electric vehicle, during discharging, the said controller and its corresponding battery pack are under control for discharging with two-way communication interactive connection, the said communication interaction data include the charging current, and cell voltage of each battery pack, /and cell temperature of each battery pack, /and SOC capacity of each battery pack, and the said controller regulates the discharging current of battery packs by changing its own output power based on this communication interaction data, to avoid problems of overcurrent and/or overtemperature and/or abnormal discharge of the battery pack cells during discharging.

Preferably, each controller comprises the MCU and control and communication module; each battery pack comprises a number of cells and the battery management system, the said battery management system is comprised of the battery MCU, MOS power switch and battery communication module, two-way communication interactive connection is adopted for the said battery communication module and the said control and communication module, and the said cells are in corresponding charge connection with the charger.

Preferably, the steps for the said controller to regulate the discharge current of battery packs by changing its own output power on the basis of this communication interaction data include: when the cell temperature of a battery pack exceeds the preset value of cell temperature difference, the corresponding controller lowers the discharge current of this battery pack by reducing the corresponding output power to it, to reduce the cell temperature of that battery pack, until its cell temperature is within the preset range of the said cell temperature, then it automatically resume the normal discharge according to the power output demand of the electric vehicle, to avoid problem of overtemperature from occurring in the battery pack cells during discharge in work.

Preferably, the steps for the said controller to regulate the discharge current of battery packs by changing its own output power on the basis of this communication interaction data include: when a controller detects that the electric vehicle is in a non-running status, and the discharge current of its corresponding battery pack has exceeded the preset highest limit of static discharge current, it automatically turns off the MOS power switch of this battery pack to enter the abnormal discharge protection mode, to avoid the problem of abnormal discharge from occurring in the battery pack cells.

Preferably, the steps for the said controller to regulate the discharge current of battery packs by changing its own output power on the basis of this communication interaction data include: when controllers detect that the electric vehicle is in a static status for a period exceeding the preset static status protection time, it automatically turns off the MOS power switch of the corresponding battery pack to enter the abnormal discharge protection mode, to avoid the problem of abnormal discharge from occurring in the battery pack cells.

Preferably, ternary lithium batteries are used for all battery packs.

Preferably, the power of the said electric vehicle is no less than 1kW.

Preferably, a single charger charges at least 2 battery packs according to the charging demand of the corresponding battery packs, during charging, the said charger and the battery packs are under control with two-way communication interactive connection, the said communication interaction data include the charging current, /and cell voltage of each battery pack, /and cell temperature of each battery pack, /and SOC capacity of each battery pack, and the said charger regulates the charging current of battery packs by changing its own output power based on this communication interaction data, to avoid problems of overvoltage and/or overcurrent and/or overtemperature of the battery pack cells during charging.

Preferably, a high and medium power electric vehicle, equipped with the multi-module intelligent drive system for high and medium power electric vehicle as described above.

Preferably, the electric vehicle is an electric motorcycle, and its maximum driving speed is over 60Km/h.

This invention has also proposed a multi-module intelligent drive system for electric vehicles, comprising a 3-phase AC motor with at least 2 winding units, and the motor drive unit electrically connected respectively corresponding to the said winding units, each motor drive unit is comprised of the electrically connected battery pack and controller, in which the said charger is comprised of the HV to LV power supply module, charge MCU and charge communication module, each battery pack comprises a number of cells and the battery management system, the said battery management system comprises the battery MCU, MOS power switch and battery communication module, two-way communication interactive connection is adopted for the said battery communication module and the said charge communication module, the said HV to LV power supply module is in corresponding charge connection with the said cells, the said communication interaction data include the charging current, /and cell voltage of all battery packs, /and the cell temperature of all battery packs, /and the SOC capacity of all battery packs.

Preferably, the said charger realizes two-way communication interactive connection with the battery packs respectively by wire and wireless means.

Preferably, the said charger realizes two-way communication interactive connection with the battery packs respectively via bus.

Preferably, ternary lithium batteries are used for all battery packs.

Preferably, each battery pack is provided with a sensor to detect the cell temperature; the said charging current, cell voltage and SOC capacity are obtained by calculation after sampling the battery MCU; also the said charge MCU samples the charging current of battery packs at the same time, conducts two-way communication interaction and feedback with the charging current obtained in sampling by the battery MCU.

Preferably, the maximum voltage range of each cell in battery packs is 3V-4.2V, the preset cell voltage difference value not greater than 0.2V, and the preset battery pack voltage difference value is not greater than 3V.

Preferably, each controller comprises the MCU and control and communication module; each battery pack comprises a number of cells and the battery management system, the said battery management system is comprised of the battery MCU, MOS power switch and battery communication module, two-way communication interactive connection is adopted for the said battery communication module and the said control and communication module, and the said communication interaction data include the discharge current, /and cell voltage of all battery packs, /and the cell temperature of all battery packs, /and the SOC capacity of all battery packs.

Preferably, the said discharge current is obtained with calculation after sampling by the battery MCU; also the said controller samples the discharge current of its corresponding battery packs at the same time, and conducts two-way communication interaction and feedback with the discharge current obtained in sampling by the battery MCU.

Preferably, an electric vehicle, equipped with the multi-module intelligent drive system for electric vehicles as described above, and the power of the said electric vehicle is no less than 1kW.

Preferably, the electric vehicle is an electric motorcycle, and its maximum driving speed is over 60Km/h.

Preferably, the battery packs mentioned in the present invention do not output current during storage and transport, to avoid dangers caused by collisions and accidents.

It should be noted that in SOC capacity involved in the whole description text of this invention, SOC is the abbreviation of State of Charge, which means the State of Electric Charge of battery, and it can also be called remaining power.

### Advantages of the present invention:

In this invention, further research and development was made on the technical difficulties in the charge and discharge management of multiple battery packs, on the basis of the technical scheme of multi-module intelligent drive system submitted on September 19, 2018:

This invention, on one hand, has creatively proposed a control method for safe charge by charging a number of battery packs with a single charger, specifically, during charging, the charger and the battery packs are under charge control with two-way communication interactive connection, the communication interactive data include information such as the charging current and cell voltage of all battery packs, the cell temperature of all battery packs, the SOC capacity of all battery packs, and the charger regulates the charging current of battery packs by changing its own output power on the basis of such communication interaction data, to avoid problems of overvoltage, overcurrent and overtemperature from occurring in battery pack cells during charging, so that the invention can realize the optimal control of current and voltage for charging the battery pack cells, to ensure that safety hidden hazards in charge caused by excessive large cell voltage difference and excessive cell temperature rise during charging in the multi-module intelligent drive system for electric vehicles of this invention.

On the other hand, this invention has also creatively proposed a method to control the safe discharge of battery packs with a controller, the controller is connected with its corresponding battery packs for discharge according to the power output demand of the electric vehicle, specifically, for discharge, the controller and its corresponding battery pack are under discharge control by the two-way communication interactive connection, and the communication interaction data include the discharge current and cell voltage of all battery packs, the cell temperature of all battery packs, and the SOC capacity of all battery packs, and the controller regulates the discharging current of battery packs by changing its own output power based on this communication interaction data, to avoid problems of overcurrent, overtemperature and abnormal discharge of the battery pack cells during discharging work, specifically embodied as: During discharge, all battery packs can confirm that the external state is normal via the two-way communication interaction with the controller before entering the normal working state, battery packs will not start discharge in case of anomaly, to avoid the danger caused by the short circuit or soft short circuit and other anomalies of the vehicle components; also, the controller can control the discharge current and cell temperature of all battery packs according to the cell envelope curve of all battery packs through two-way communication interaction with the battery packs, to significantly improves the battery life and extend the endurance mileage of the vehicle.

This invention has also specifically proposed the structure of the multi-module intelligent drive system for electric vehicles, in the battery packs, the battery communication module of battery management system and the charge communication module of the charger are connected with two-way communication interactive connection, the HV to LV power supply module is in corresponding charge connection with cells, realizing rapid and reliable two-way communication interactive connection of the battery packs with the charger, in simple structure, without taking any extra mounting space; it is also preferably stated to adopt two-way communication interactive connection for the battery communication modules of the battery packs with the control and communication modules of corresponding controllers, further realizing rapid and reliable two-way communication interactive connection of the battery packs with the corresponding controllers, in simple structure, without taking any extra mounting space.

Tests and comparison show that the service life of batteries with the multi-module intelligent drive system proposed in this invention can be increased by at least 50% as compared with the battery scheme of medium and high power drive system with the existing technology.

### Description of figure

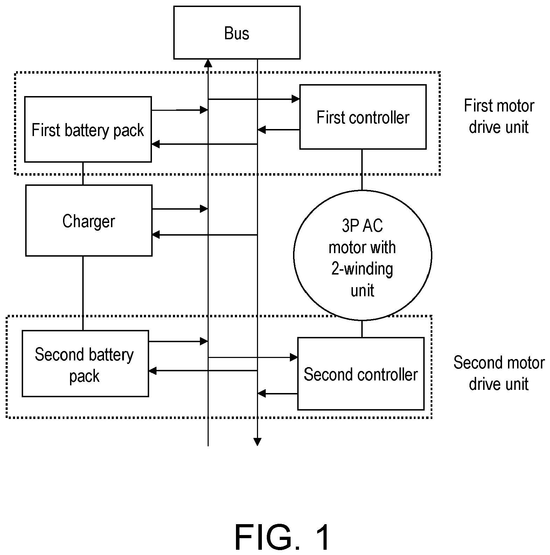

Fig. 1 shows the schematic connection structure of the multi-module intelligent drive system in the embodiment of this invention.

### Embodiment

The embodiment proposes a multi-module intelligent drive system of high and medium power electric vehicles, the said multi-module intelligent drive system of high and medium power electric vehicles comprises a three-phase AC motor with at least 2 winding units, and the motor drive unit electrically connected corresponding to the said winding units, a motor drive unit comprising the electrically connected battery pack and controller, the said controller is connected with the corresponding battery pack in discharging according to the power output demand of the electric vehicle, during discharging, the said controller and its corresponding battery pack are under control for discharging with two-way communication interactive connection, the said communication interaction data include the charging current, and cell voltage of each battery pack, /and cell temperature of each battery pack, /and SOC capacity of each battery pack, and the said controller regulates the discharging current of battery packs by changing its own output power based on this communication interaction data, to avoid problems of overcurrent and/or overtemperature and/or abnormal discharge of the battery pack cells during discharging.

To enable personnel in the technical field to better understand the technical scheme in the invention, the technical scheme in the invention embodiment is described clearly and completely in combination with the figure of the invention embodiment below. Obviously, the described embodiment is only part of the embodiments of the invention, instead of all the embodiments. All other embodiments obtained by ordinary technical personnel in the field without making creative work on the basis of the embodiments of the invention shall fall within the scope of protection of this invention.

This application is a further technical innovation on charge and discharge management based on the multi-module drive innovation technology proposed by the applicant on September 19, 2018, therefore the identical embodiment is used to further describe the technical effect of this invention.

This embodiment proposes a high and medium power electric vehicle driven by a multi-module intelligent drive system. Specifically, in this embodiment, the electric vehicle is an electric motorcycle with an input power range of 600W-10KW, more preferably, its input power range is 1KW-10KW, the highest speed of electric motorcycle is over 60Km/h, and more preferably, its highest speed can be up to 70Km/h, or even over 80Km/h. In the higher speed range, the intelligent driving technology effect of the multi-module intelligent drive system proposed in this embodiment will be better. The dynamic performance and riding experience of the electric motorcycle proposed in this embodiment are directly comparable to that of the fuel oil motorcycles.

Please refer to Fig. 1, the multi-module intelligent drive system of this embodiment comprises a 3-phase AC motor with 2 winding units, and the first motor drive unit and the second motor drive unit in corresponding electrical connection respectively with the winding units, the first motor drive unit is comprised of the electrically connected first battery pack and the first controller, and the second motor drive unit is comprised of the electrically connected second battery pack and the second controller;

Specifically and preferably, in this embodiment, the 3-phase AC motor is a permanent magnet synchronous hub motor. The specific structural design of the permanent magnet synchronous hub motor and each motor drive unit in this embodiment can be fully referred to the technical content recorded in Embodiment 1 in CN201811094649.9. This embodiment combines all of its technical content and references as the implementation basis of the embodiment in this application, and it can realize the technical effect of multi-module intelligent drive, so no specific description is made here to save space.

Preferably, in this embodiment, all battery packs are sized 48V20AH, and they work simultaneously to guarantee the power source of the intelligent drive of the permanent magnet synchronous hub motor, specifically and preferably, in this embodiment, all battery packs are ternary lithium batteries, with the maximum discharge rate of each ternary lithium battery ≤3C, providing strong and stable energy guarantee for the multi-module intelligent drive system of the high and medium power electric vehicles.

Preferably, in this embodiment, the charger comprises the HV to LV power supply module, charge MCU, charge communication module, each battery pack comprises a number of cells and the battery management system, the battery management system is comprised of the battery MCU, MOS power switch and battery communication module, two-way communication interactive connection is adopted for the battery communication module and the charge communication module, the HV to LV power supply module is in corresponding charge connection with cells; The two-way communication interactive connection is realized for the charger and the battery packs respectively via wire or wireless means; each controller comprises the MCU and control and communication module; and battery two-way communication interactive connection is adopted for the communication module and control and communication module;

Preferably, in this embodiment, two-way communication interactive connection includes sending data communication connection TX and receiving data communication connection RX, the specific communication connection mode can be wired communication mode such as UART or CAN bus, or wireless communication mode such as Bluetooth, GPRS and WIFI, and certainly, other communication connection methods known to the technical personnel in the field may also be adopted; specifically and preferably, in this embodiment, the charger and all battery packs, as well as the controller and the corresponding battery packs respectively achieve two-way communication interactive connection via buses;

Preferably, in this embodiment, to achieve efficient and reliable two-way communication interactive connection, all battery packs are equipped with sensors for detecting the cell temperature; the charging current, cell voltage and SOC capacity are obtained through calculation after sampling by the MCU; the charging MCU samples the charging current of battery packs at the same time, and carries out two-way communication and interactive feedback with the charging current sampled by the battery MCU; also, the controller samples the discharge current of its corresponding battery packs at the same time, and carries out two-way communication and interactive feedback with the discharge current sampled by the battery MCU;

This embodiment presents the charge control method for the above-mentioned multi-module intelligent drive system for high and medium power electric vehicles, and a single charger is used to charge at least 2 battery packs according to the charge demand of the corresponding battery packs, preferably, in this embodiment, the charge demand is determined by the cell voltage and/or cell temperature and/or SOC capacity of the battery packs, specifically and preferably, the applicant recommended that in the specific implementation, the charge demand should be determined comprehensively according to the cell voltage and/or cell temperature and/or SOC capacity of the battery packs, this is because the charge-discharge characteristics of the secondary electrochemical batteries are determined by the electrochemical characteristics of the battery itself, specifically by the characteristics of anode and cathode materials and internal impedance parameters of the battery, which can be specifically expressed as the charge (discharge) -battery SOC capacity curve and battery cell temperature characteristic curve, and in this embodiment, the charge demand is determined on the basis of these battery data and its inherit characteristics;

Preferably, in this embodiment, the first battery pack and second battery pack respectively calculates the cell voltage and cell temperature and SOC capacity obtained from sampling, to obtain its corresponding required maximum charging current, the specific calculation method being that public known in the field, and send this required maximum charging current as its corresponding charge demand message to the charger, the charger, based on its required maximum charging current, calculates the target charge voltage of the battery pack, and this target charge voltage is used as the charge target for charging all battery packs.

In this embodiment, during charging, the charger and the battery packs are under charge control with two-way communication interactive connection, the communication interactive data include the charging current and cell voltage of all battery packs, the cell temperature of all battery packs, and the SOC capacity of all battery packs, they may also include other data requiring communication and interaction according to the needs in control development, and there is no restriction in this application, and the charger regulates the charging current of battery packs by changing its own output power on the basis of such communication interaction data, to avoid problems of overvoltage, overcurrent and overtemperature from occurring in battery pack cells during charging, so that the invention can realize the optimal control of current and voltage for charging the battery pack cells, to ensure that safety hidden hazards in charge caused by excessive large cell voltage difference and excessive cell temperature rise during charging in the multi-module intelligent drive system for electric vehicles of this embodiment.

Preferably, in this embodiment, the communication interactive connection charge control steps include:
S10) The charger respectively receives the charge demand from the first battery pack and second battery pack, when the first battery pack or second battery pack needs separate charge, it enters step S20), when the first battery pack and second battery pack need charge at the same time, it enters step S30);
S20) The charger charges the battery packs requiring charge, during charging, the charger regulates the charging current of the battery packs by changing its own output power on the basis of the communication interaction data, to avoid problems of overvoltage and/or overcurrent and/or overtemperature from occurring in the battery pack cell during charging;
S30) It judges whether the voltage difference between the first battery pack and second battery pack has exceeded the preset value of battery pack voltage difference, when the preset value of battery pack voltage difference is exceeded, it enters step S40), when the preset value of battery pack voltage difference is not exceeded, it enters step S50);
S40) The low voltage battery pack is charged according to the charge demand of the low voltage battery pack, to raise the voltage of the low voltage battery pack, until the voltage difference between the first battery pack and second battery pack is within the range of the preset value of the battery pack voltage difference, and then it enters step S50);
S50) The first battery pack and second battery pack are charged simultaneously, during charging, the charger regulates the charging current of the battery packs by changing its own output power on the basis of the communication interaction data, to avoid problems of overvoltage, overcurrent and overtemperature from occurring in the battery pack cells during charging;

Specifically and preferably, in this embodiment, the process for the charger to regulate the charging current of battery packs includes the following charging conditions:
A1. When the cell voltage difference of a battery pack exceeds the preset value of cell voltage difference, the charger lowers the charging current of this battery pack by reducing the corresponding output power to it, until the difference of its cell voltage is within the range of the preset value of cell voltage difference, then it automatically resume charge according to the charge demand of this battery pack, to avoid the overvoltage problem from occurring in the battery pack cells during charging.
A2. When the cell temperature of a battery pack exceeds the preset range of cell temperature, the charger lowers the charging current of this battery pack by reducing the corresponding output power to it, to lower the cell temperature of the battery pack, until its cell temperature is within the preset range of cell temperature, then it automatically resume charge according to the charge demand of this battery pack, to avoid the overtemperature problem from occurring in the battery pack cells during charging.
A3. When the charger detects that the charging current of a battery pack exceeds the preset highest limit of the charging current, the MOS power switch of the battery pack (usually the main MOS switch) is automatically turned off to enter the overcurrent protection mode, to avoid the overcurrent problem from occurring in battery pack cells during charging, further preferably, in this embodiment, it can be chosen to turn on the MOS power switch of the battery pack (usually the main MOS switch) after a certain interval (such as 3~5s) if no large charging current exceeding the preset highest limit of the charging current is detected, normal charge is automatically restored, if an excessive large current is still detected, the MOS power switch of the battery pack is automatically turned off again, further, the number of turning on again the MOS power switch of the battery pack after a time interval can be set, if an excessive large current is still detected after 3 times, it is judged as an anomaly in the drive of the electric vehicle, and the charger will be set in a protected status and no charge will be possible.

For the multi-module intelligent drive system for electric vehicles in this embodiment, a safe discharge control method has also been proposed, and the technical scheme adopted is as follows:
The controller is connected with its corresponding battery packs for discharge according to the power output demand of the electric vehicle, during discharge, the controller and its corresponding battery pack are under discharge control by the two-way communication interactive connection, and the communication interaction data include the discharge current and cell voltage of all battery packs, the cell temperature of all battery packs, and the SOC capacity of all battery packs, and the controller regulates the discharging current of battery packs by changing its own output power based on this communication interaction data, to avoid problems of overcurrent, overtemperature and abnormal discharge of the battery pack cells during discharging work; its active technical effect is specifically embodied as: During discharge, all battery packs can confirm that the external state is normal via the two-way communication interaction with the controller before entering the normal working state, battery packs will not start discharge in case of anomaly, to avoid the danger caused by the short circuit or soft short circuit and other anomalies of the vehicle components; also, the controller can control the discharge current and cell temperature of all battery packs according to the cell envelope curve of all battery packs through two-way communication interaction with the battery packs, to significantly improves the battery life and extend the endurance mileage of the vehicle;

Specifically and preferably, in this embodiment, the process for the controller to regulate the discharge current of battery packs includes the following discharge conditions:
B1. When the cell temperature of a battery pack exceeds the preset range of cell temperature, its corresponding controller lowers the discharge current of this battery pack by reducing the corresponding output power to it, to lower the cell temperature of the battery pack, until its cell temperature is within the preset range of cell temperature, then it automatically resume discharge according to the power output demand of the electric vehicle, to avoid the overtemperature problem from occurring in the battery pack cells during discharge;
B2. When a controller detects that the electric vehicle is in a non-running status, and the discharge current of its corresponding battery pack has exceeded the preset highest limit of static discharge current, it automatically turns off the MOS power switch of this battery pack to enter the abnormal discharge protection mode, to avoid the problem of abnormal discharge from occurring in the battery pack cells;
B3. When controllers detect that the electric vehicle is in a static status for a period exceeding the preset static status protection time, it automatically turns off the MOS power switch of the corresponding battery pack to enter the abnormal discharge protection mode, to avoid the problem of abnormal discharge from occurring in the battery pack cells.

It should be noted that, in the implementation of this application, the preset values of various types in the control system are usually set based on the safety management needs of practical application in this field and the inherent characteristics of the batteries, preferably, in this embodiment, the maximum voltage range of each cell in battery packs is 3V--4.2V, the preset value of cell voltage difference is no more than 0.2V, the preset value of voltage difference of battery packs is no more than 3V, the preset cell temperature range is -10-55°C, the preset highest limit of charging current is 40-50A, the preset highest limit of static discharge current is 3-5A, and the preset static protection time is no less than 20 minutes; of course, the preferable range of these preset values are not taken as restriction to the protection range claimed by this application.

**Comparison:** Other technical schemes of this comparison are identical to those of the above embodiment, with the difference that: in this comparison, the stator adopts a single winding unit, which is electrically connected to a single motor driver, and the single motor driver is connected with two battery packs sized 48V20AH generally available on the market, so that the other pack can be used when one pack is used up. For the specific motor and controller technical scheme of this comparison, please refer to the contents recorded in comparison 1 of the previous patent application CN201811094649.9 directly.

In this comparison, only one battery pack is working, the maximum discharge current in normal riding exceeds 3C, while the continual running current exceeds 2C, quite harmful to 20AH batteries, this will reduce the service life of batteries, and batteries are apt to heat up, posing a safety hidden hazard.

The internal comparative test and verification by the applicant shows that, the battery packs of this embodiment can increase the service life by at least 50% as compared with the single working battery pack scheme of the comparison.

The technical personnel of this field can also apply the charge and discharge management scheme proposed for the multi-module intelligent drive system of this embodiment to motor drive with multi-winding units according to the control need, for example other embodiments of the previous patent application CN201811094649.9, to obtain the technical effect similar to that in the embodiment of this application. The embodiments of this application will not be explained further one by one.

For those skilled in the art, it is clear that the invention is not limited to the details of the above exemplary embodiments, and that the invention can be realized in other specific forms without departing from the spirit or basic characteristics of the invention. Therefore, at any point, the implementation should be regarded as exemplary and unrestrictive, and the scope of the invention is defined by the appended claims rather than the above description, and therefore aims to include all the changes within the meaning and scope of the equivalent elements of the claim. Any appended drawing reference signs in the claims shall not be regarded as restrictions on the claims.

Unless otherwise indicated, the numerical ranges involved include the beginning and end values. It will be obvious to those skilled in the art that changes and modifications may be made, and therefore, the aim in the appended claims is to cover all such changes and modifications.

## Claims

1. A multi-module intelligent drive system of high and medium power electric vehicles, comprises a three-phase AC motor with at least 2 winding units, and motor drive units correspondingly electrically connected to the winding units, each of the motor drive unit comprising a battery pack and a controller being electrically connected, **characterized in that**,
the controller is connected to the corresponding battery pack in discharging according to a power output demand of an electric vehicle, during discharging, the controller is connected to its corresponding battery pack with communication interaction in two-way under control for discharging, data of the communication interaction include a discharging current of each of the battery package, and a cell voltage of each of the battery pack, /and a cell temperature of each of the battery pack, /and a SOC capacity of each of the battery pack, and the controller regulates the discharging current of the battery packs by changing a output power of the controller based on the data of the communication interaction, to avoid problems of overcurrent and/or overtemperature and/or abnormal discharge of battery pack cells during discharging.

2. The multi-module intelligent drive system of the high and medium power electric vehicles of claim 1, **characterized in that**, each of the controllers comprises a MCU and a control and communication module; each of the battery pack comprises a plurality of cells and a battery management system, the battery management system comprises the battery single-chip mircrocomputer, a MOS power switch and a battery communication module, communication interaction in two-way is adopted for connecting the battery communication module to the control and communication module, and the cells are correspondingly connected to the charge in charging.

3. The multi-module intelligent drive system of the high and medium power electric vehicles of claim 1, **characterized in that**, the steps for the controller to regulate the discharge current of battery packs by changing the output power of the controller on the basis of this communication interaction data include:
when the cell temperature of the battery pack exceeds a preset cell temperature range, the corresponding controller lowers the discharge current of the battery pack by reducing the corresponding output power to the controller, to reduce the cell temperature of the battery pack, until the cell temperature is within the preset cell temperature range, then the controller automatically resume the normal discharge according to the power output demand of the electric vehicle, to avoid problem of overtemperature from occurring in the battery pack cells during discharge in work.

4. The multi-module intelligent drive system of the high and medium power electric vehicles of claim 1, **characterized in that**, the steps for the controller to regulate the discharge current of battery packs by changing the output power of the controller on the basis of this communication interaction data comprise:
when a controller detects that the electric vehicle is in a non-running status, and the discharge current of the corresponding battery pack has exceeded a preset highest limit of a static discharge current, the controller automatically turns off aMOS power switch of this battery pack to enter an abnormal discharge protection mode, to avoid the problem of abnormal discharge from occurring in the battery pack cells.

5. The multi-module intelligent drive system of the high and medium power electric vehicles of claim 1, **characterized in that**, the steps for the controller to regulate the discharge current of battery packs by changing the output power of the controller on the basis of this communication interaction data include:
when controllers detect that the electric vehicle is in a static status for a period exceeding a preset static status protection time, the controller automatically turns off a MOS power switch of the corresponding battery pack to enter an abnormal discharge protection mode, to avoid the problem of abnormal discharge from occurring in the battery pack cells.

6. The multi-module intelligent drive system of the high and medium power electric vehicles of claim 1, **characterized in that**, ternary lithium batteries are used for all the battery packs.

7. The multi-module intelligent drive system of the high and medium power electric vehicles of claim 1, **characterized in that**, the power of the electric vehicle is no less than 1kW.

8. The multi-module intelligent drive system of the high and medium power electric vehicles of claim 1, **characterized in that**, a single charger charges at least two battery packs according to a charging demand of the corresponding battery packs, during charging, the charger is connected to the battery packs with communication interaction in two-way under control for charging, the data of the communication interaction comprises a charging current of each of the battery pack, /and the cell voltage of each of the battery pack, /and the cell temperature of each of the battery pack, /and the SOC capacity of each of the battery pack, and the charger regulates the charging current of the battery packs by changing the output power of the controller based on the data of the communication interaction, to avoid problems of overvoltage and/or overcurrent and/or overtemperature of the battery pack cells during charging.

9. A high and medium power electric vehicle, **characterized by** being equipped with the multi-module intelligent drive system for high and medium power electric vehicle of any one of claim 1-8.

10. The high and medium power electric vehicle of claim 9, **characterized in that**, the electric vehicle is an electric motorcycle, and a maximum driving speed of the electric vehicle is over 60Km/h.
